# EUROPEAN PATENT SPECIFICATION

(11) **EP 1 070 240 B1**
(45) Date of publication and mention of the grant of the patent: **10.07.2002**
(21) Application number: 99913503.1
(22) Date of filing: 01.04.1999
(51) Int. Cl.: G01N 1/06

(54) **SPECIMEN SLICER**
PROBENSCHNEIDER
APPAREIL A DECOUPER UN PRELEVEMENT

(30) Priority: 04.04.1998 GB 9807192
(43) Date of publication of application: 24.01.2001
(73) Proprietor: Webb Microtome Limited, London NW1 6AD (GB)
(72) Inventor: WEBB, Sim Fong, Surlingham Norwich Norfolk NR14 7DQ (GB)
(74) Representative: Gillam, Francis Cyril
(86) International application number: GB9901013
(87) International publication number: WO9951962

(56) References cited:
- EP-A- 0 483 567
- FR-A- 558 817
- US-A- 2 680 992
- US-A- 4 754 675

## Description

This invention relates to apparatus suitable for cutting a tissue section from a biological specimen, for subsequent analysis for example by microscopy or by the growing of cultures therefrom.

Since the advent of microscopy, there has been a need to prepare specimens to render them suitable for inspection or other analytical techniques. Depending upon the nature of the specimen, certain initial steps may need to be performed on the specimen, such as treating with a resin, cooling or even freezing. Following any such initial steps, the usual procedure is to cut a very thin tissue section (typically one cell thick) from the specimen and then to mount the tissue section on a slide, ready for further treatments such as staining, and inspection. In order to assist with the cutting of the tissue section from the specimen, there have been various proposals for sectioning apparatus, usually referred to as microtomes, operating on slicing or guillotining principles. These range from relatively simple devices through to highly complex equipment. With the advancements in technology, there has been a tendency to employ relatively complicated microtomes when a simpler design often would suffice.

In this specification, the term "slice" is used to mean a relatively thicker section of a specimen, suitable for the growing of a cell culture, whereas "section" is used to mean a relatively thinner section of a specimen, suitable for optical microscopy.

A disadvantage of many known designs of microtome (such as that described in FR-A-558817) is that when attempting to prepare a tissue section from either a fresh soft organ (such as a cornea) or a fresh firm tissue (such as vegetation), a pre-treatment step is almost always required, in order that the specimen might have sufficient stiffness to permit the accurate cutting of a relatively thin tissue section. For example, if taking a corneal section from an eyeball, the current procedure is that the eye must first be frozen before it can be placed within a conventional microtome, for the production of a tissue section ready for analysis by use as a culture tissue. Disadvantages of such chilling or freezing treatments are that they can damage or even kill the cells of the specimen, for example by rupturing the cells or changing their morphology, apart from the extra time required to complete those steps before the specimen is ready for cutting.

A hand-held and hand-operated microtome is also described in US-A-2680992, and though this is able better to support a specimen, it can produce a slice only from the end of the specimen, and then only of a thickness predetermined by the dimensions of a recess in which the end of the specimen is received, before slicing.

It is a principal aim of the present invention to provide apparatus to produce a tissue section or slice, which apparatus is relatively simple and easy to use, and yet which permits the production of tissue sections or slices ready for mounting, staining and microscopic examination on glass slides, or for a tissue culture, even from relatively soft specimens.

According to the present invention, there is provided apparatus for cutting a section or slice from a biological specimen, which apparatus comprises a body defining a specimen cavity open at one end, a counter-cavity also open at one end and arranged with the open one end thereof directly opposed to the open one end of the specimen cavity whereby the specimen to be sliced may be located partially in the specimen cavity and partially in the counter-cavity, guide means for a slicing blade disposed to guide a slicing blade mounted thereon to traverse between the respective open one ends of the specimen and counter-cavities, and respective piston means mounted in the specimen and counter-cavities permit the independent adjustment of the respective effective volumes thereof.

It will be appreciated that the apparatus of this invention is relatively simple and thus easy to manufacture. By providing an adjustable cavity for receiving for example a fresh soft organ, it is possible to produce slices (perhaps of 100 µm thick, or so) from relatively soft specimens such as fresh corneas and which slices are suitable for initiating cell cultures. Equally, it is possible to produce sections (typically 1 or 2 cells thick) from relatively firm specimens and which sections are suitable for use in optical microscopy.

In a preferred embodiment, the body comprises first and second body parts hinged together for relative movement between open and closed positions, the body parts having respective abutment faces which engage each other when the body parts are in the closed position. In this case, the axis of hinging movement should be orthogonal to the axis of said cavity and spaced therefrom. Alternative possibilities for moving the body parts between their open and closed positions include having the body parts arranged for relative sliding movement in a direction substantially parallel to the axis of the cavity, or having one part mounted for rotational movement about an axis parallel to the axis of the cavity.

In the above arrangements, the body parts may have respective confronting faces which are disposed in parallel but closely spaced planes when the body parts are in their closed position, so as to define the guide means for the cutting blade. By having said specimen cavity formed in the first body part and the counter-cavity in the second body part, the cavities opening into the respective confronting faces of the two body parts, the guide means for the blade will cause a blade to traverse across the open ends of the cavities so that a specimen placed in the two cavities will be sliced by a cutting blade traversing the open ends.

The effective volume of the specimen cavity should be adjustable in order to optimise the holding of a specimen thereby to permit the production of a very thin section or slice therefrom. The effective volume is adjustable by means of said piston slidable within the cavity to adjust the depth thereof. Preferably, the specimen cavity is of cylindrical form, and adjusting movement of the piston may be effected in a controlled manner by means of a screw-threaded adjuster coupled to the piston and engaged in a threaded bore in the body part. Alternatively, a screw-threaded stub may project from the body, the adjuster being in the form of a nut engaged with the stub and coupled to the piston. A graduated scale may be provided on the adjuster reading against an index provided on the body or on the piston, whereby the piston may be advanced towards or withdrawn from the confronting face through a controlled distance, thereby to assist the cutting of a section or slice of a required thickness.

In a preferred embodiment of this invention, the specimen cavity and the counter-cavity are configured in substantially the same way - that is to say, a piston is also provided in the second portion of the specimen cavity and takes the form of a slidable piston together with a screw-threaded adjuster.

Though a microtome of this invention as described above may be used for cutting a wide variety of biological specimens, there could be problems in cutting matter such as a leaf stalk, when a transverse section is required. To address this, the microtome may be used with a specimen carrier of.a mouldable material and which may be -shaped wholly to surround the specimen and to be received in the specimen cavity. Thus, a stalk may be held by the mouldable material with the length of the stalk parallel to or coincident with the axis of the cavity, whereby the blade will cut transversely of the length of the stalk. Selection of a suitable type of mouldable material will depend upon the specimen to be cut, but should not itself be difficult to cut; examples include pith, putty or a modelling putty (e.g. Plasticine®), a stiff gel, or vegetable matter such as carrot or potato.

Preferably, the diameter of the specimen cavity is sufficiently large to accommodate a conventional slide cover slip. Then, with the preferred design of microtome having a specimen cavity partially in each body part, a specimen may be located in the cavity in one part and a cover slip in the cavity in the other part. The piston in that other part should be adjusted so that the exposed face of the cover slip is in the same plane as the confronting face of the other body part; then, following the positioning of the specimen in the cavity of the one body part, closing of the two parts and adjustment of the piston of the one part, the section or slice will be cut directly on the cover slip. On opening the microtome, the cover slip carrying the section or slice may be used directly on a slide or used for growing a cell culture.

The cutting blade itself need not form a part of the apparatus of this invention and conveniently a conventional razor blade may be provided for the purpose of cutting a tissue section or slice from the specimen. To assist guiding of such a razor blade, a ledge may be formed along one edge of one of the confronting faces of the body parts and along which the cutting blade may run at the completion of a cutting action. Alternatively, a cutting blade holder may be mounted on one of the body parts and arranged to allow a held cutting blade to perform a cutting action across the specimen cavity. Even with such a configuration, the cutting blade itself may still be a conventional razor blade though it would be possible to utilise instead a cutting blade specifically manufactured for use with the apparatus.

Typically, and particularly when a conventional razor blade is used as the cutting blade, the separation between the two confronting faces of the two body parts when the microtome is closed is of the order of 110µm. to 150µm, and for a known commercially-available razor blade, substantially 100µm.

By way of example only, one specific embodiment of slicing apparatus constructed and arranged in accordance with the present invention will now be described in detail, reference being made to the accompany drawings, in which:-
Figure 1 is a side view of the apparatus in an open position;
Figures 2 to 4 are respectively plan, side and under-plan views of the apparatus of Figure 1 but in a closed position;
Figure 5 is an end view of the apparatus; and
Figure 6 diagrammatically illustrates the cutting of a transverse section for example of a stalk.

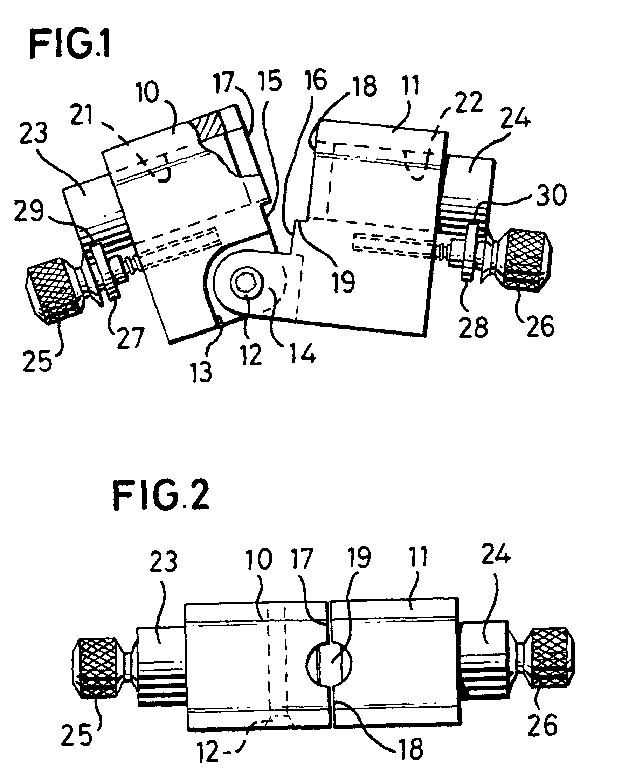

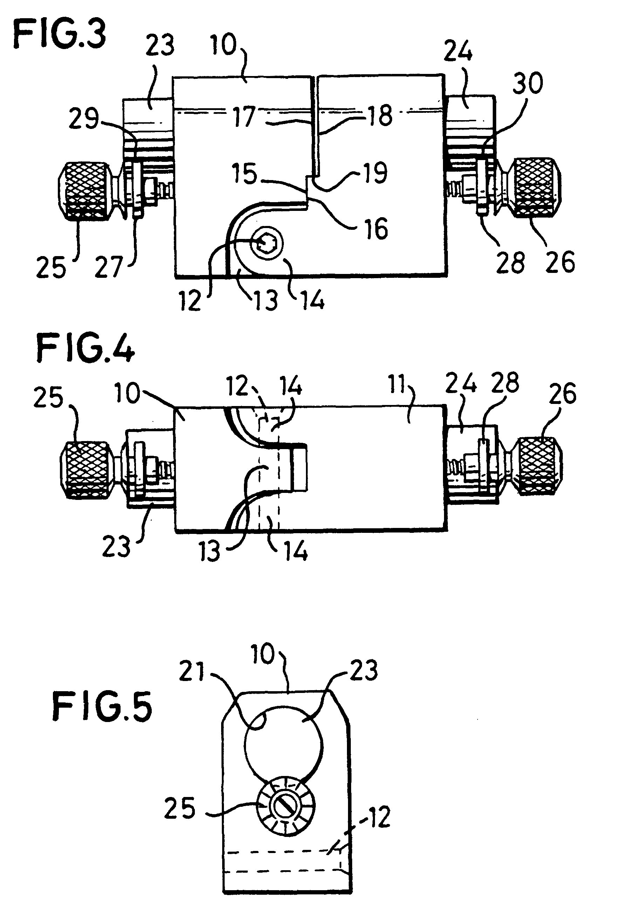

The apparatus shown in the drawings comprises first and second body parts 10 and 11 pivoted together by means of a transverse pin 12. Body part 10 defines in a lower region a central projection 13 which interfits between two arms 14 formed on the body part 11, the pin 12 extending transversely through the arms and projection so as to permit the body parts to pivot relatively between the open position shown in Figure 1 and the closed position shown in Figure 3. Body part 10 defines an abutment surface 15 and body part 11 a corresponding abutment surface 16, which surfaces engage each other as shown in Figure 3 when the body parts are fully closed, thereby defining that closed position.

Each body part 10 and 11 further includes a respective confronting surface 17 and 18, parallel to the adjacent abutment surface 15 and 16 and thus also parallel to each other when the body parts are closed. In this position the confronting surfaces are closely spaced apart, typically by about 100µm. On the second body part 11, there is a ledge 19 formed between the abutment face 16 and confronting face 18, for a purpose to be described below.

The two body parts have formed therein respective cylindrical bores 21 and 22, each of which bores opens into the respective confronting face 17 and 18. A respective piston 23 and 24 is mounted in each bore 21 and 22, for sliding movement towards and away from the associated confronting face 17 and 18. Each piston has an associated screw-threaded adjuster 25 and 26, threaded on to a stub itself threaded into and locked in the body part. Each adjuster has a respective flange 27 and 28 engaged in an arcuate slot 29 and 30 in the respective piston. In this way, rotation of an adjuster 25, 26 advances the associated piston towards or moves the piston away from the confronting face 17 or 18. The edge of each adjuster engaged with the outer end of the associated piston preferably carries graduations around the circumference, calibrated to the pitch of the screw-thread of the adjuster. Those graduations may be read against the edge of the associated piston so that the piston may be advanced through a known distance, as determined by the graduations on the flange.

The body portions 10, 11 and pistons 23, 24 are preferably manufactured from a rigid and stable grade of plastics material such as that known as Delrin (RTM). Preferably, the two pistons are of a different colour from that of the body parts, to allow users easily to gauge by eye the depth of the cavity. Also, the two pistons may be of dissimilar colours, to assist easy adjustment, for example, by always retracting a piston of one colour to accommodate the sample to be cut. The adjusters 25 and 26 as well as the pin 12 may be made of stainless steel. The apparatus may thus easily be cleaned or even autoclaved without risk of damage to the component parts.

The apparatus is used with a conventional known form of razor blade which typically is about 100µm thick. The two pistons 23 and 24 are retreated from their respective confronting faces using adjusters 25, 26 and then a specimen to be sliced is located in one of the cavities. The apparatus is closed (Figure 1) and then the pistons 23, 24 are advanced until the specimen is held therebetween, with the required region positioned in the vicinity of the slot between the confronting faces 17 and 18. A razor blade is then slid through that slot, down to shoulder 19, so forming a first cut through the specimen. One piston is advanced and the other piston is retreated, both through the same known distance as read from the graduations on the respective adjuster flanges 27, 28 and then a further cut is made through the specimen. In this way, a tissue slice of the required thickness will have been cut from the specimen, and on opening the apparatus the slice may be removed and appropriately mounted for microscopic examination, or such other purpose as may be desired.

In another process, a slide cover slip is positioned in one cavity and the piston adjusted until the exposed face of the cover slip is co-planar with the associated confronting face; the other piston is retreated, the specimen located in the cavity, the microtome closed, and the other piston advanced until the specimen contacts the cover slip. Then, a section or slice is cut from the specimen, directly on to the cover slip.

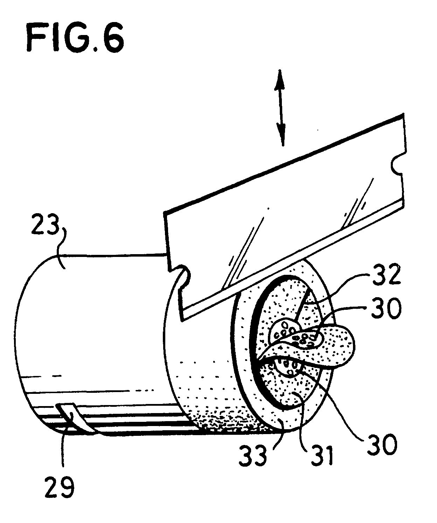

Figure 6 illustrates another way of proceeding, when a relatively thin specimen is to be sectioned. Here, the specimen 30 (such as a leaf stalk) is held in a soft flexible material 31, such as pith. This may be achieved by cutting a circular piece of pith, and then effecting a cut 32 along the length of that piece, part way through a diameter of that piece. By separating the pith along the cut 32, the stalk may be positioned between the separated parts, and the pith then closed around the stalk. The pith may then be positioned in a plastic annular holder 33 which is in turn located in one of the specimen cavities by retreating the associated piston. The length of the pith should be slightly greater than the axial length of the holder 33, to expose material for cutting. Following positioning of the holder in the specimen cavity, operation proceeds as described previously, to cut off a relatively thin section or slice, ready for further processing.

Instead of pith, other soft materials may be employed, so long as they do not damage or otherwise affect the structure of the specimen. For example, materials such as modelling putty or even other vegetable matter such as carrot or potato may be employed for the purpose of supporting the specimen to be cut.

It will be appreciated that a particular advantage of the microtome of this invention is that it may be used on living specimens, even when those specimens are relatively soft or pliable. Damage to the specimen is minimised and, most importantly, the tissues will not be killed by those processing procedures which are required with conventional microtomes, such as wax and resin embedding.

## Claims

1. Apparatus for cutting a section or slice from a biological specimen, which apparatus comprises a body defining a specimen cavity open at one end, a counter-cavity also open at one end and arranged with the open one end thereof directly opposed to the open one end of the specimen cavity whereby the specimen to be sliced may be located partially in the specimen cavity and partially in the counter-cavity, guide means for a slicing blade disposed to guide a slicing blade mounted thereon to traverse between the respective open one ends of the specimen and counter-cavities, and respective piston means mounted in the specimen and counter-cavities permit the independent adjustment of the respective effective volumes thereof.

2. Apparatus as claimed in claim 1, wherein the body comprises first and second body parts hinged together for relative movement between open and closed positions, the body parts having respective abutment faces which engage each other when the body parts are in the closed position and further having respective confronting faces which are parallel but closely spaced apart when the body parts are in the closed position, the specimen cavity being formed in the first body part with the open one end of the cavity disposed in the confronting face of the first part and the counter-cavity being formed in the second body part with the open one end of the counter-cavity disposed in the confronting face of the second part, so that a specimen may be placed in the specimen and counter-cavities and when so placed may be sliced by a cutting blade traversing the confronting faces.

3. Apparatus as claimed in claim 2, wherein each piston means adjusts the depth of the respective cavity.

4. Apparatus as claimed in claim 2 or claim 3, wherein the specimen cavity is of cylindrical form within which a piston is slidably mounted.

5. Apparatus as claimed in claim 4, wherein a screw-threaded adjuster is coupled to the piston for performing controlled adjusting movement of the piston within the specimen cavity.

6. Apparatus as claimed in any of the preceding claims, wherein the configurations of the specimen cavity and the counter-cavity are essentially the same.

7. Apparatus as claimed in claim 2, wherein the guide means is defined by the confronting faces of the two body parts.

8. Apparatus as claimed in claim 7, wherein one of the two body parts provides a ledge along one edge of its confronting face, and along which ledge the said cutting blade may run when performing.a cutting action.

9. Apparatus as claimed in any of claims 2, 7 or 8, wherein the separation between the confronting faces of the two body parts when in the closed position lies in the range of 100µm to 150µm.

10. A microtome as claimed in any of the preceding claims in combination with an annular holder slidably received in the specimen cavity and within which a specimen may be located.

11. A microtome as claimed in any of the preceding claims, wherein there is provided a cutting blade holder mounted on one of the body parts and arranged to allow a held cutting blade to perform a cutting action across the specimen cavity.

## Patentansprüche

1. Vorrichtung zum Schneiden eines Querschnitts oder einer Scheibe aus einer biologischen Probe, wobei die Vorrichtung ein Gehäuse, das einen an einem Ende offenen Probenhohlraum, einen Gegenhohlraum, der auch an einem Ende offen ist und mit seinem offenen Ende direkt dem offenen Ende des Probenhohlraums gegenüberliegend angeordnet ist, wodurch die zu schneidende Probe teilweise in dem Probenhohlraum und teilweise in dem Gegenhohlraum plaziert werden kann, eine Führungseinrichtung für ein Schneidmesser, die dazu ausgestaltet ist, ein daran angebrachtes Schneidmesser zwischen den jeweiligen offenen Enden des Probenhohlraums und des Gegenhohlraums zu führen, und jeweils Kolbeneinrichtungen aufweist, die in dem Probenhohlraum und in dem Gegenhohlraum angebracht sind, um die unabhängige Einstellung von deren jeweiligen effektiven Volumen zu ermöglichen.

2. Vorrichtung nach Anspruch 1, wobei das Gehäuse erste und zweite Gehäuseteile aufweist, die für eine relative Bewegung zwischen einer offenen und einer geschlossenen Position gelenkig verbunden sind, wobei die Gehäuseteile jeweils Anlageoberflächen haben, die aneinander anliegen, wenn die Gehäuseteile in der geschlossenen Position sind, und ferner einander gegenüberstehende Flächen haben, die parallel zueinander, aber auf geringem Abstand zueinander liegen, wenn die Gehäuseteile in der geschlossenen Position sind, wobei der Probenhohlraum in dem ersten Gehäuseteil mit dem offenen Ende des Hohlraums in der gegenüberstehenden Fläche des ersten Gehäuseteils angeordnet gebildet ist und der Gegenhohlraum in dem zweiten Gehäuseteil mit dem offenen Ende des Gegenhohlraums in der gegenüberstehenden Fläche des zweiten Gehäuseteils angeordnet gebildet ist, so dass eine Probe in dem Probenhohlraum und dem Gegenhohlraum plaziert werden kann und, wenn sie so plaziert ist, durch ein die gegenüberstehenden Flächen überquerendes Schneidmesser geschnitten werden kann.

3. Vorrichtung nach Anspruch 2, wobei jede Kolbeneinrichtung die Tiefe des jeweiligen Hohlraums einstellt.

4. Vorrichtung nach Anspruch 2 oder 3, wobei der Probenhohlraum eine Zylinderform hat, in der ein Kolben gleitfähig angebracht ist.

5. Vorrichtung nach Anspruch 4, wobei ein mit Schraubgewinde versehenes Einstellelement mit dem Kolben verbunden ist, um eine kontrollierte Einstellbewegung des Kolbens innerhalb des Probenhohlraums auszuführen.

6. Vorrichtung nach einem der vorhergehenden Ansprüche, wobei die Gestaltung des Probenhohlraums und des Gegenhohlraums im Wesentlichen die gleiche ist.

7. Vorrichtung nach Anspruch 2, wobei die Führungseinrichtung durch die gegenüberstehenden Flächen der beiden Gehäuseteile definiert wird.

8. Vorrichtung nach Anspruch 7, wobei eines der beiden Gehäuseteile mit einem Vorsprung entlang einer Kante seiner gegenüberstehenden Fläche versehen ist, und wobei das Schneidmesser entlang dieses Vorsprungs laufen kann, wenn es einen Schneidvorgang ausführt.

9. Vorrichtung nach einem der Ansprüche 2, 7 oder 8, wobei der Abstand zwischen den gegenüberstehenden Flächen der beiden Gehäuseteile, wenn diese sich in der geschlossenen Position befinden, im Bereich von 100 µm bis 150 µm liegt.

10. Mikrotom nach einem der vorhergehenden Ansprüche in Verbindung mit einem ringförmigen Halter, der gleitfähig in dem Probenhohlraum aufgenommen ist und in dem eine Probe plaziert werden kann.

11. Mikrotom nach einem der vorhergehenden Ansprüche, wobei ein Schneidmesserhalter vorgesehen ist, der an einem der Gehäuseteile montiert ist und dazu ausgelegt ist, einem gehaltenen Schneidmesser zu ermöglichen, einen Schneidvorgang über den Probenhohlraum auszuführen.

## Revendications

1. Appareil pour couper une section ou tranche d'un spécimen biologique, cet appareil comprenant un corps définissant une cavité pour le spécimen, ouverte à une première extrémité, une contre-cavité également ouverte à une première extrémité et agencée avec sa première extrémité ouverte directement en face de la première extrémité ouverte de la cavité pour le spécimen, de sorte que le spécimen à trancher peut être situé partiellement dans la cavité pour le spécimen et partiellement dans la contre-cavité, des moyens de guidage pour une lame de tranchage, disposés pour guider une lame de tranchage montée sur eux pour passer entre les premiéres extrémités ouvertes respectives de la cavité pour le spécimen et de la contre-cavité, et des moyens à piston respectifs montés dans la cavité pour le spécimen et la contre-cavité permettent de régler indépendamment leurs volumes effectifs respectifs.

2. Appareil selon la revendication 1, dans lequel le corps comprend des première et seconde parties de corps articulées ensemble pour leur mouvement relatif entre des positions ouverte et fermée, les parties de corps ayant des faces de butée respectives qui s'appuient l'une sur l'autre lorsque les parties de corps sont dans la position fermée, et ayant en outre des faces frontales respectives qui sont parallèles mais faiblement écartées lorsque les parties de corps sont dans la position fermée, la cavité pour le spécimen étant formée dans la première partie de corps avec sa première extrémité ouverte disposée dans la face frontale de la première partie et la contre-cavité étant formée dans la seconde partie de corps avec la première extrémité ouverte de la contre-cavité disposée dans la face frontale de la seconde partie, de sorte qu'un spécimen peut être placé dans la cavité pour le spécimen et la contre-cavité et, ainsi placé, peut être tranché par une lame coupante traversant le long des faces frontales.

3. Appareil selon la revendication 2, dans lequel chaque moyen à piston règle la profondeur de la cavité respective.

4. Appareil selon la revendication 2 ou 3, dans lequel la cavité pour le spécimen est de forme cylindrique dans laquelle un piston est monté coulissant.

5. Appareil selon la revendication 4, dans lequel un dispositif de réglage à pas de vis est couplé au piston pour effectuer un mouvement de réglage commandé du piston dans la cavité pour le spécimen.

6. Appareil selon l'une quelconque des revendications précédentes, dans lequel les configurations de la cavité pour le spécimen et de la contre-cavité sont essentiellement les mêmes.

7. Appareil selon la revendication 2, dans lequel les moyens de guidage sont définis par les faces frontales des deux parties du corps.

8. Appareil selon la revendication 7, dans lequel l'une des deux parties du corps comporte le long d'un bord de sa face frontale un rebord le long duquel la lame coupante peut se déplacer lorsqu'elle effectue une action de coupe.

9. Appareil selon l'une quelconque des revendications 2, 7 ou 8, dans lequel l'intervalle entre les faces frontales des deux parties du corps lorsqu'elles sont en position de fermeture est dans la zone de 100 à 150 µm.

10. Microtome selon l'une quelconque des revendications précédentes en combinaison avec un support annulaire monté coulissant dans la cavité pour le spécimen et dans lequel un spécimen peut être positionné.

11. Microtome selon l'une quelconque des revendications précédentes, dans lequel il est prévu un support de lame coupante monté sur l'une des parties du corps et agencé pour permettre à une lame coupante maintenue d'effectuer une action de coupe à travers la cavité pour le spécimen.
